# EUROPEAN PATENT APPLICATION

(11) **EP 3 508 466 A1**
(43) Date of publication of application: **10.07.2019**
(21) Application number: 17844939.3
(22) Date of filing: 26.05.2017
(51) Int. Cl.: C05C 11/00, A01C 21/00

(54) **NOVEL CARBON-BASED MATERIAL AND APPLICATION THEREOF**

(30) Priority: 31.08.2016 CN 201610795430
(71) Applicant: Beijing Xinna International New Materials Technology Co., Ltd., Beijing 100176 (CN)
(72) Inventor: JIN, Gong, Beijing 100176 (CN); GUO, Zhijiang, Beijing 100176 (CN); TU, Jiangping, Beijing 100176 (CN); WANG, Xiuli, Beijing 100176 (CN); CI, Lijie, Beijing 100176 (CN); FANG, Rongxiang, Beijing 100176 (CN); XIE, Jianping, Beijing 100176 (CN)
(74) Representative: Atkinson & Company Intellectual Property Limited
(86) International application number: PCT/CN2017/086086
(87) International publication number: WO 2018/040632

(57) **Abstract**

A novel carbon-based material (abbreviated N-FCN) composed of carbon, hydrogen, oxygen and nitrogen and application thereof. The raw materials of the novel carbon-based material are derived from natural or simple inorganic matter which provide the four elements of carbon, hydrogen, oxygen and nitrogen in the novel carbon-based material. A composite organic matter is formed at low voltage and low energy and comprises a carbon base in graphite structure, at least one or more composite organic functional groups and an organic small molecule, wherein at least two or more amino acids may be detected in the organic small molecule. The novel carbon-based material may induce an active response of an organism. After a trace of the novel carbon-based material is released into a biological growth environment, the organism will actively respond to the induction of the novel carbon-based material. At the same time, the novel carbon-based material has a broad spectrum of response, depending on growth characteristics of different organisms, as well as different beneficial effects of the response, such as accelerated growth, increased biomass, increased resistance, increased yield and improved quality.

## Description

### TECHNICAL FIELD

The present invention belongs to the technical field of novel materials and applications thereof, in particular to the synthesis of a carbon-based composite organic matter having a function of inducing a response of an organism by simulating original natural conditions and by using a natural or simple inorganic matter as a raw material. The novel carbon-based material is mainly composed of elements of carbon, hydrogen, oxygen and nitrogen. The release of a trace of the novel carbon-based material into a growth environment of an organism may be used as an exogenous signal to induce an active response of the organism, such that the development speed and the yield of the organism are increased spontaneously, thereby achieving different beneficial effects, such as accelerated growth, increased biomass, improved stress resistance, increased yield and improved quality.

### BACKGROUND

By using chemical agents, human beings have developed human intervention techniques, such as fertilization, pesticide spraying and transgenosis, to obtain higher short-term output of organisms. It is worth noting that the organisms are living things similar to human beings, accompanied with the tolerance to human intervention and the resistance to genetic evolution. With less than a hundred years of human intervention, the phenomenon of the resistance of the organisms has increased significantly. More importantly, the evolution of the resistance of the organisms has exceeded the range that human beings can expect, such as malignant field weeds that have been occurred in recent years, and super bacteria that can propagate in agriculture and even among human beings. Therefore, human intervention is not equal to manual control. In order for the organisms to achieve better service for the human beings, it is necessary to conform to evolutionary codes of the organisms and gently induce the evolution of the organisms in the direction that the human beings desire, rather than chemically impelling the organisms to accelerate growth or increase yield.

Unlike the modern human intervention theory, the theory of chemical life origin is the initial theory of the human beings to know organisms. Based on the unity of raw material compositions of the life and the combination of matters, the theory of chemical life origin expounds the origin of life to a certain extent and links the modern biology, mainly including three levels: (1) from inorganic matters to organic small molecules; 2) from organic small molecules to biological macromolecules, which refers to the evolution of amino acids and nucleotides to biological proteins and nucleic acid molecules; and (3) acting as the basis for linking with the modern gene proteomics, the biology, and the like. It is worth noting that this theory does not clarify the reason for the evolution and development of organic small molecules to cells and even to organisms, that is, the evolution of organic small molecules to life; however, this theory has an extremely high application value because it indicates that the small molecules that are transformed from inorganics to organics can be utilized by the organisms for evolution of species. More valuably, in the context of the unity of the human beings and biological evolution, this kind of organic small molecules can be used as a friendly induction means of simulating the transformation from inorganic matters in an original state to organic small molecules, to activate biological evolution and induce organisms to grow and breed rapidly, thereby achieving the sustainable and harmonious development of the human beings and the organisms.

Based on the above technical background, the mechanism of the present invention lies in that: in the process of matter evolution in nature, in order to maintain long-term existence of matters, there is an intrinsic protection drive from simple to complex, which is referred to as "a driving signal". Under the driving signal, a matter in an original state shows various changes, for example, changes in color, temperature and size, through the matter exchange process of electrons, charges, etc., thereby causing the phenomena of energy exchange, material reorganization and the like, and further reflecting the process of driving signal and evolution process from simple inorganic matters to organic small molecules, as well as from organic small molecules to cells and life. The external environmental conditions can affect the driving signal response in the living body, but the key determinant is the abundance of the driving signal itself. At present, the driving signal may be embodied by a way of simulating the transformation from inorganic matters to organic small molecules. In the current environmental conditions, such a trace of the released driving signal may induce the organisms to think that they can evolve and thus to grow and breed rapidly, thereby achieving the technical goal of the human beings to induce gentle organism breeding.

### SUMMARY

The objective of the present application is to reduce the current ecological risk generated by chemical interventions in organisms, and to realize that the organisms can actively respond to external control signals, spontaneously accelerate the development speed and increase the yield. The present invention simulates materials and conditions of life origin, and provides a novel carbon-based material having the beneficial effects of inducing an active response of an organism and exhibiting rapid growth, etc.

The idea of this technical solution lies in: (1) taking four elements that constitute the life as constituent elements of the novel carbon-based material; (2) transforming an inorganic matter into a composite organic small molecule, wherein the composite organic small molecule is obtained by selecting a natural or simple inorganic matter existing in an original state of life origin as a raw material of C, H, O, N, and by simulating a synthetic condition of life origin at low voltage and low energy; and (3) synthesizing a carbon-based composite material that has activity and an active response of an organism, and has organic small molecules (such as amino acids) that have essential characteristics of life origin which can be detected.

The present application is implemented by the following technical solution:
a novel carbon-based material is prepared by taking a natural or simple inorganic matter capable of providing carbon, hydrogen, oxygen and nitrogen as a raw material, and by transforming the inorganic matter into an organic matter by low-voltage electrolysis;
the organic matter at least comprises a carbon base, at least two kinds of amino acid or ammonium-based active ingredients, and an R group that maintains the novel carbon-based material in a relatively stable state.

Preferably, the molecular formula of the organic matter is C_{X}H_{y}O_{z}Nₖ, wherein x ranges from 2 to 1000, y ranges from 50 to 1200, z ranges from 30 to1000, and k is a natural number from 1 to 100; and
the organic matter, after being released into water, comprises the carbon base, an organic small molecule, and the R group that maintains the novel carbon-based material in a relatively stable state, wherein the organic small molecule includes at least two kinds of the amino acids or the ammonium-based active ingredients.

Preferably, the raw material is water, graphite and inorganic nitrogen source, or the raw material is water, methane and ammonia gas.

Preferably, the water is deionized water; the graphite is natural graphite or artificial graphite; the inorganic nitrogen source comprises nitrogen from one or a combination of two or more of ammonia gas, nitrogen gas, and ammonium nitrogen or nitrate nitrogen.

Preferably, the organic matter has a general formula of C-R-N or 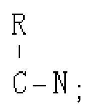 the carbon base takes carbon in a graphite structure as a skeleton; the R group or the ammonium nitrogen or imido nitrogen is present on the surface and/or the edge of a substrate of the skeleton;
the R group comprises a combined functional group consisting of one or more of a hydroxyl, a carboxyl, an ether bond, an epoxy group, a carbonyl, an aldehyde group, an ester group, and an alkyl; and
the N group, after being released into water, comprises one or a combination of two or more of an amino group, an ammonium group or an amine group.

Preferably, the R group is a hydrophilic functional group.

Preferably, after the R group is released, a free radical R group is present, of free hydrogen the pH is 2-6, and conductivity is more than 1500 us/cm.

Preferably, the organic small molecule is a combination of carbon element and at least one element of hydrogen, oxygen or nitrogen.

Preferably, the amino acids include at least alanine or glycine.

Preferably, the novel carbon-based material comprises an aqueous agent or powder; the aqueous agent may be obtained directly from water-added powder.

There is provided applications of a novel carbon-based material, the novel carbon-based novel material described in any of the above items being applied to a biological environment for inducing or regulating the functions of biosynthesis and metabolic pathways.

Preferably, the biological environment comprises at least plants, microorganisms, and an ecological environment.

Preferably, the microorganisms include at least bio-bacterial fertilized strains and flora, and engineered strains and flora.

Preferably, the ecological environment at least comprises an ecosystem composed of plants, soil, and microorganisms.

The principle of the present invention to induce responses of the plants is as follows.

On the basis of biological genetics, a change in external growth conditions is considered to be a signal that regulates gene expression within an organism which, by inducing external signals and transmitting signals in a living body, activates gene expression in the living body to trigger a biological reaction. This may be considered as a response of the organism from a macro point of view. Due to the difference in signals, the effect of biological response does not necessarily overlap with the beneficial effect that the human beings expect.

Unlike general signal matters, in the present application, hydrogen, the small molecular carbon skeleton, the complex R group, amino groups and the like which are released from the novel carbon-based material simulate the growth conditions in the original life state, including key components, raw materials or products of growth and evolution of an organism. More importantly, the novel carbon-based material has a signal function that makes the organism think that the external growth conditions are suitable, activates the overexpression of bio-related genes, accelerates the synthesis of the biochemical reaction, and improves the utilization efficiency of temperature, light, water, gas and fertilizers supplied externally. The organism exhibits active response results that the human beings can expect, such as accelerated growth, cumulatively increased biomass, and increased seed breeding amount.

The present invention has the following beneficial effects.

According to the novel carbon-based material of the technical solution, the simple inorganic matter is transformed into the organic matter to which the organism can respond actively by using the viewpoint of origin and evolution of life, and by artificially simulating the conditions and raw materials of the natural environment. The method is environment-friendly, bio-friendly and free of any ecological risks.

The novel carbon-based material of the technical solution comprises various combinations consisting of four elements including carbon, hydrogen, oxygen and nitrogen, with carbon as a skeleton, and covers various forms of organic functional groups, in particular including amino acids or ammonium groups, thereby satisfying all the essentials required for a plant's active response to receptors.

The novel carbon-based material of the present technical solution can be directly applied to the existing biotechnology.

### BRIEF DESCRIPTION OF THE DRAWINGS

FIG. 1 is a macroscopic schematic diagram of a novel carbon-based material;
Figure 2 is a schematic diagram of the novel carbon-based material with the reduction of carbon bases;
Figure 3A is a photograph of a C-skeleton of the novel carbon-based material observed with an electron microscope;
Figure 3B is a photograph of the C-skeleton of the novel carbon-based material observed with a transmission electron microscope;
Figure 3C is an infrared diagram of an R functional group in the novel carbon-based material to which a nitrogen source is added;
Figure 3D is an infrared diagram of the change in nitrogen in the novel carbon-based material;
Figure 3E is a mass spectrum of glycine in the novel carbon-based material;
Figure 3F is a mass spectrum of alanine in the novel carbon-based material;
Figure 4 is a comparative schematic diagram showing an active biological response of Arabidopsis thaliana to the novel carbon-based material;
Figure 5 is a comparative schematic diagram showing an active biological response of Escherichia coli to the novel carbon-based material.

### DETAILED DESCRIPTION

The technical solution of the present invention will be described in detail with reference to embodiments. The following embodiments are merely exemplary for explaining and describing the technical solution of the present invention only and should not be construed to limit the technical solution of the present invention.

### Embodiment 1

The present application provides a novel carbon-based material which is prepared by taking an inorganic matter capable of providing carbon, hydrogen, oxygen and nitrogen as a raw material, and by transforming the inorganic matter into an organic matter having a molecular formula of C_{X}H_{y}O_{z}Nₖ by electrolysis, wherein x ranges from 2 to 1000, y ranges from 50 to 1200, z ranges from 30 to1000, and k is a natural number from 1 to 100.

The most remarkable characteristic of the novel carbon-based material synthesized in the present application is that at least two kinds of amino acids having a transitional function from organic small molecules to biomolecules can be detected.

The organic matter, after being released into water, at least comprises a carbon base, an organic small molecule, and an R group that maintains the novel carbon-based material in a relatively stable state, wherein the organic small molecule includes at least two kinds of amino acids or ammonium-based active ingredients.

The organic small molecule is a combination of a carbon element and at least one of a hydrogen, oxygen or nitrogen element.

The raw materials are simple and naturally available inorganic matters such as water, graphite and an inorganic nitrogen source, which provide four elements C, H, O and N of the organic matter in the present application. A low-voltage direct current of 1-5 V is used as an energy synthesis condition to simulate a natural condition.

In the present technical solution, in the case of simulating the natural condition and providing the low voltage (1-5 V), the novel carbon-based material may be obtained directly just by energizing the water, the graphite and the inorganic nitrogen source for a period of time. The simulated natural condition here is to use inorganic water, graphite and inorganic nitrogen source as natural sources of the four elements C, H, O and N.

The water is pure water that does not contain other ingredients. The graphite is natural graphite or artificial graphite. The inorganic nitrogen source includes nitrogen from one or a combination of two or more of ammonia gas, nitrogen gas, ammonium nitrogen or nitrate nitrogen.

The specific mass percentages of various components in the organic matter are shown in the table below:

| | C | H | O | N |
|---|---|---|---|---|
| 1 | 20% | 45% | 34% | 1% |
| 2 | 33.39% | 31.67% | 34.9% | 0.04% |
| 3 | 25% | 40% | 33% | 2% |
| 4 | 30% | 35% | 27% | 8% |
| 5 | 34% | 30% | 29% | 7% |
| 6 | 28.9% | 35% | 36% | 0.1% |
| 7 | 25.71% | 30.67% | 35.88% | 7.74% |
| 8 | 20.52% | 44.73% | 27.01% | 7.74% |

A general formula of the organic matter is C-R-N or

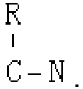

The carbon base takes carbon in a graphite structure as a skeleton. A hydrophilic R functional group is present on the surface and/or the edge of a substrate of the carbon skeleton. The carbon base has a size smaller than submicron.

The R functional group comprises a combined function group consisting of one or more of a hydroxyl, a carboxyl, an ether bond, an epoxy group, a carbonyl, an aldehyde group, an ester group, and an alkyl.

The N functional group, after being released into water, comprises one or a combination of two or more of an amino group, an ammonium group or an amine group.

Hydrogen released from the R functional group is present in a form of a free radical R group. The pH of free hydrogen is 2-6, and the conductivity is more than 1500 us/cm.

After the novel carbon-based material of the present application is released to water, the combined functional group consisting of one or more of a carbon base, a hydroxyl, a carboxyl, an ether bond, an epoxy group, a carbonyl, an aldehyde group, an ester group, and alkyl can be detected, and two or more kinds of amino acids (at least including alanine and glycine) can be detected. The above-mentioned combined functional groups are all active. When external conditions change, for example, when mineral elements are added, the structure and the active state of the novel carbon-based material may change accordingly.

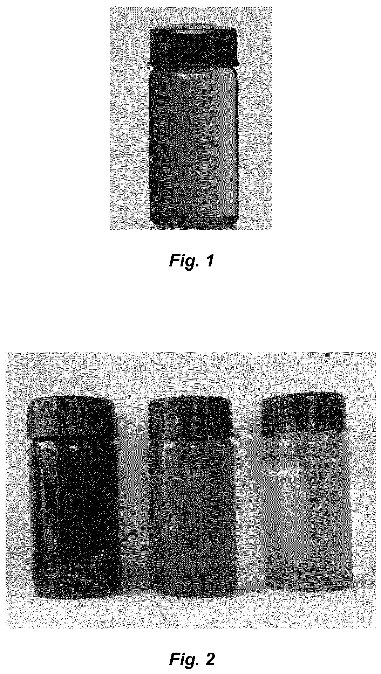

As shown in Figure 1, the novel carbon-based material comprises an aqueous agent or powder, wherein the aqueous agent may be obtained directly from water-added powder. Figure 2 is a schematic diagram showing the change in color of the aqueous agent from left to right when the carbon content in the novel carbon-based material gradually decreases.

### Embodiment 2

The present application provides a novel carbon-based material which is prepared by taking an inorganic matter capable of providing carbon, hydrogen, oxygen and nitrogen as a raw material, and by transforming the inorganic matter into an organic matter having a molecular formula of C_{X}H_{y}O_{z}Nₖ by electrolysis, wherein x ranges from 2 to 1000, y ranges from 50 to 1200, z ranges from 30 to1000, and k is a natural number from 1 to 100.

The most remarkable characteristic of the novel carbon-based material synthesized in the present invention is that at least two kinds of amino acids having a transitional function from organic small molecules to biomolecules can be detected.

The organic matter, after being released into water, at least comprises a carbon base, an organic small molecule, and an R group that maintains the novel carbon-based material in a relatively stable state, wherein the organic small molecule includes at least two kinds of amino acids or ammonium-based active ingredients.

The organic small molecule is a combination of carbon element and at least one of hydrogen, oxygen or nitrogen element.

The raw materials are simple and naturally available inorganic matters: water, graphite and an inorganic nitrogen source, which provide four elements C, H, O and N of the organic matter in the present application. A low-voltage direct current of 1-5 V is used as an energy synthesis condition to simulate a natural condition.

In the present technical solution, in the case of simulating the natural condition and providing the low voltage (1-5 V), the novel carbon-based material of the present application is prepared just by energizing the water and the graphite for a period of time to obtain a product and then adding an inorganic nitrogen source to the product. In this process, no other chemical components are introduced. The simulated natural condition here is to use inorganic water, graphite and inorganic nitrogen source as natural sources of the four elements C, H, O and N.

The water is pure water that does not contain other ingredients. The graphite is natural graphite or artificial graphite. The inorganic nitrogen source comprises nitrogen from one or a combination of two or more of ammonia gas, nitrogen gas, ammonium nitrogen or nitrate nitrogen.

In the present embodiment, the specific mass percentages of various components in the organic matter are shown in the table below:

| | C | H | O | N |
|---|---|---|---|---|
| 1 | 20% | 43% | 35% | 2% |
| 2 | 31.39% | 33.67% | 34.9% | 0.04% |
| 3 | 27% | 38% | 31% | 4% |
| 4 | 28% | 37% | 44% | 1% |
| 5 | 32% | 32% | 28% | 8% |
| 6 | 26.9% | 36% | 37% | 0.1% |
| 7 | 25.71% | 31.67% | 35.88% | 6.74% |
| 8 | 22.52% | 42.73% | 27.01% | 7.74% |

A general formula of the organic matter is C-R-N or

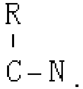

The carbon base takes carbon in a graphite structure as a skeleton. A hydrophilic R functional group is present on the surface and/or the edge of a substrate of the carbon skeleton. The carbon base has a size smaller than submicron.

The R functional group comprises a combined functional group consisting of one or more of a hydroxyl, a carboxyl, an ether bond, an epoxy group, a carbonyl, an aldehyde group, an ester group, and an alkyl.

The N function group, after being released into water, comprises one or a combination of two or more of an amino group, an ammonium group or an amine group.

Hydrogen released from the R functional group is present in a form of a free radical R group. The pH of free hydrogen is 2-6, and the conductivity is more than 1500 us/cm.

After the novel carbon-based material of the present application is released to water, the combined functional group consisting of one or more of a carbon base, a hydroxyl, a carboxyl, an ether bond, an epoxy group, a carbonyl, an aldehyde group, an ester group, and alkyl can be detected, and two or more kinds of amino acids (at least including alanine and glycine) may be detected.

The novel carbon-based material comprises an aqueous agent or powder, wherein the aqueous agent may be obtained directly from water-added powder.

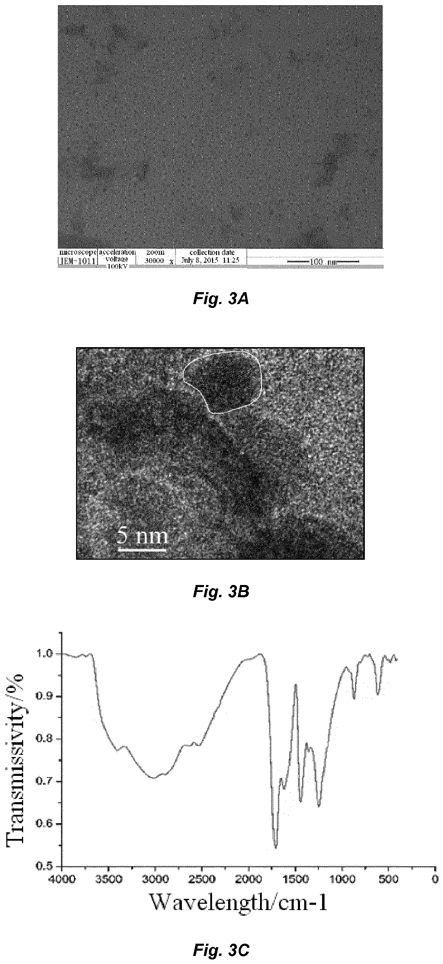

The novel carbon-based material is freeze-dried. A prepared sample is observed with an electron microscope, and irregular particles may be seen, as shown in Figure 3A. Further, the novel carbon-based material is observed with a high-resolution transmission electron microscope, and a slice layer having a graphite structure may be found, as shown in Figure 3B.

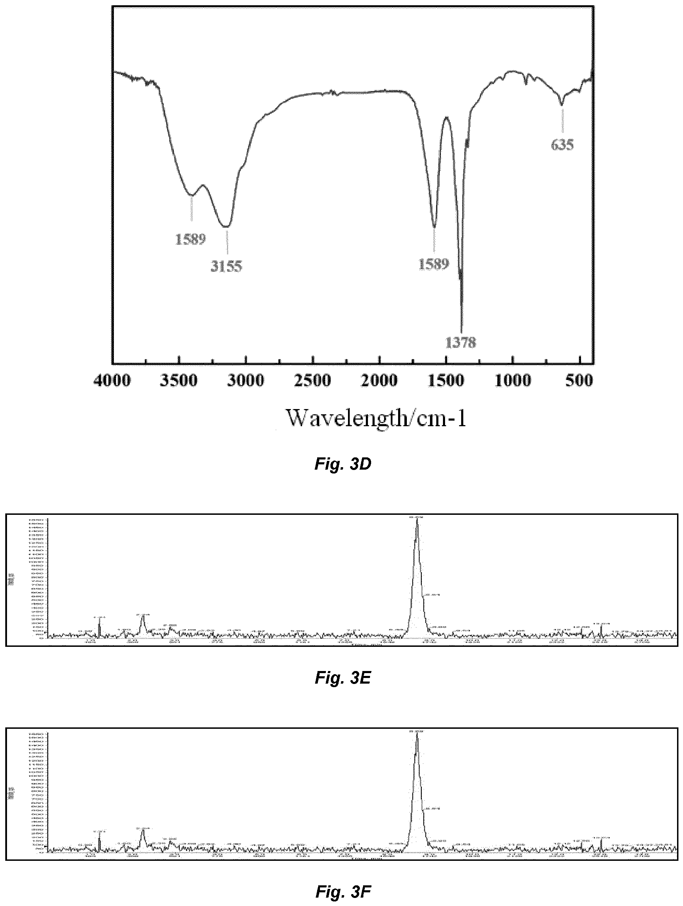

In Embodiment 2, as shown in Figure 3C, the combined functional group consisting of one or more of a hydroxyl, a carboxyl, an ether bond, an epoxy group, a carbonyl, an aldehyde group, an ester group, and an alkyl may be seen by an infrared method, a nuclear magnetic method, XPS or the like before the inorganic nitrogen source is added. In Embodiment 1 and Embodiment 2 of the present application, as shown in Figure 3D, a change in nitrogen in the novel carbon-based material may be detected by the infrared method, the nuclear magnetic method, XPS or the like.

### Embodiment 3

The present application provides a novel carbon-based material which is prepared by taking an inorganic matter capable of providing carbon, hydrogen, oxygen and nitrogen as a raw material, and by transforming the inorganic matter into an organic matter having a molecular formula of C_{X}H_{y}O_{z}Nₖ by electrolysis, wherein x ranges from 2 to 1000, y ranges from 50 to 1200, z ranges from 30 to1000, and k is a natural number from 1 to 100.

The most remarkable characteristic of the novel carbon-based material synthesized in the present invention is that at least two kinds of amino acids having a transitional function from organic small molecules to biomolecules can be detected.

The organic matter, after being released into water, at least comprises a carbon base, an organic small molecule, and an R group that maintains the novel carbon-based material in a relatively stable state, wherein the organic small molecule includes at least two kinds of amino acids or ammonium-based active ingredients.

The organic small molecule is a combination of carbon element and at least one of hydrogen, oxygen or nitrogen element.

The raw materials are simple and naturally available matters such as water, graphite and methane, which provide four elements C, H, O and N of the organic matter in the present application. A low-voltage direct current of 1-5 V is used as an energy synthesis condition to simulate a natural condition.

In the present technical solution, in the case of simulating the natural condition and providing the low voltage (1-5 V), the novel carbon-based material may be prepared directly just by energizing the water, the graphite and the methane for a period of time. The simulated natural condition here is to use inorganic water, graphite and methane as natural sources of the four elements C, H, O and N.

The water is pure water that does not contain other ingredients. The graphite is natural graphite or artificial graphite.

The specific mass percentages of various components in the organic matter are shown in the table below:

| | C | H | O | N |
|---|---|---|---|---|
| 1 | 20% | 45% | 34% | 1% |
| 2 | 33.39% | 31.67% | 34.9% | 0.04% |
| 3 | 25% | 40% | 33% | 2% |
| 4 | 30% | 35% | 27% | 8% |
| 5 | 34% | 30% | 29% | 7% |
| 6 | 28.9% | 35% | 36% | 0.1% |
| 7 | 25.71% | 30.67% | 35.88% | 7.74% |
| 8 | 20.52% | 44.73% | 27.01% | 7.74% |

A general formula of the organic matter is C-R-N or

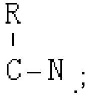

The carbon base takes carbon in a graphite structure as a skeleton. A hydrophilic R functional group is present on the surface and/or the edge of a substrate of the carbon skeleton. The carbon base has a size smaller than submicron.

The R functional group comprises a combined functional group consisting of one or more of a hydroxyl, a carboxyl, an ether bond, an epoxy group, a carbonyl, an aldehyde group, an ester group, and an alkyl.

The N functional group, after being released into water, comprises one or a combination of two or more of an amino group, an ammonium group or an amine group.

Hydrogen released from the R functional group is present in a form of a free radical R group. The pH of free hydrogen is 2-6, and the conductivity is more than 1500 us/cm.

After the novel carbon-based material of the present application is released to water, the combined functional group consisting of one or more of a carbon group, a hydroxyl, a carboxyl, an ether bond, an epoxy group, a carbonyl, an aldehyde group, an ester group, and alkyl can be detected, and two or more kinds of amino acids (at least including alanine and glycine) can be detected. The above-mentioned combined functional groups are all active. When external conditions change, for example, when mineral elements are added, the structure and the active state of the novel carbon-based material may change accordingly.

As shown in Figure 1, the novel carbon-based material comprises an aqueous agent or powder, wherein the aqueous agent may be obtained directly from water-added powder. Figure 2 is a schematic diagram showing the change in color of the aqueous agent from left to right when the carbon content in the novel carbon-based material gradually decreases.

### Embodiment 4

The present application provides a novel carbon-based material which is prepared by taking an inorganic matter capable of providing carbon, hydrogen, oxygen and methane as a raw material, and by transforming the inorganic matter into an organic matter having a molecular formula of C_{X}H_{y}O_{z}Nₖ by electrolysis, wherein x ranges from 2 to 1000, y ranges from 50 to 1200, z ranges from 30 to 1000, and k is a natural number from 1 to 100.

The most remarkable characteristic of the novel carbon-based material synthesized in the present application is the most remarkable characteristic that at least two kinds of amino acids having a transitional function from organic small molecules to biomolecules can be detected.

The organic matter, after being released into water, at least comprises a carbon base, an organic small molecule, and an R group that maintains the novel carbon-based material in a relatively stable state, wherein the organic small molecule includes at least two kinds of amino acids or ammonium-based active ingredients.

The organic small molecule is a combination of carbon element and at least one of hydrogen, oxygen or nitrogen element.

The raw materials are simple and naturally available matters: water, graphite and methane, which provide four elements C, H, O and N of the organic matter in the present application. A low-voltage direct current of 1-5 V is used as an energy synthesis condition to simulate a natural condition.

In the present technical solution, in the case of simulating the natural condition and providing the low voltage (1-5 V), the novel carbon-based material of the present application is prepared just by energizing the water and the graphite for a period of time to obtain a product, and then adding the methane to the product. In this process, no other chemical components are introduced. The simulated natural condition here is to use inorganic water, graphite and methane as natural sources of the four elements C, H, O and N.

The water is pure water that does not contain other ingredients. The graphite is natural graphite or artificial graphite. The methane may be either natural methane or synthetic methane.

In the present embodiment, the specific mass percentages of various components in the organic matter are shown in the table below:

| | C | H | O | N |
|---|---|---|---|---|
| 1 | 20% | 43% | 35% | 2% |
| 2 | 31.39% | 33.67% | 34.9% | 0.04% |
| 3 | 27% | 38% | 31% | 4% |
| 4 | 28% | 37% | 44% | 1% |
| 5 | 32% | 32% | 28% | 8% |
| 6 | 26.9% | 36% | 37% | 0.1% |
| 7 | 25.71% | 31.67% | 35.88% | 6.74% |
| 8 | 22.52% | 42.73% | 27.01% | 7.74% |

A general formula of the organic matter is C-R-N or

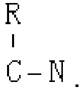

The carbon base takes carbon in a graphite structure as a skeleton. A hydrophilic R functional group is present on the surface and/or the edge of a substrate of the carbon skeleton. The carbon base has a size smaller than submicron.

The R functional group comprises a combined functional group consisting of one or more of a hydroxyl, a carboxyl, an ether bond, an epoxy group, a carbonyl, an aldehyde group, an ester group, and an alkyl.

The N functional group, after being released into water, comprises one or a combination of two or more of an amino group, an ammonium group or an amine group.

Hydrogen released from the R functional group is present in a form of a free radical R group. The pH of free hydrogen is 2-6, and the conductivity is more than 1500 us/cm.

After the novel carbon-based material of the present application is released to water, the combined functional group consisting of one or more of a carbon group, a hydroxyl, a carboxyl, an ether bond, an epoxy group, a carbonyl, an aldehyde group, an ester group, and alkyl can be detected, and two or more kinds of amino acids (at least including alanine and glycine) may be detected.

The novel carbon-based material comprises an aqueous agent or powder, wherein the aqueous agent may be obtained directly from water-added powder.

The novel carbon-based material is freeze-dried. A prepared sample is observed with an electron microscope, and irregular particles may be seen, as shown in Figure 3A. Further, the novel carbon-based material is observed with a high-resolution transmission electron microscope, and a slice layer having a graphite structure may be found, as shown in Figure 3B.

In Embodiment 4, as shown in Figure 3C, the combined functional group consisting of one or more of a hydroxyl, a carboxyl, an ether bond, an epoxy group, a carbonyl, an aldehyde group, an ester group, and an alkyl may be seen by an infrared method, a nuclear magnetic method, XPS or the like before the methane is added. In Embodiment 3 and Embodiment 4 of the present application, as shown in Figure 3D, a change in nitrogen in the novel carbon-based material may be detected by the infrared method, the nuclear magnetic method, XPS or the like.

By analyzing the novel carbon-based materials prepared in Embodiments 1 to 4, and using an amino acid analyzer or a mass spectrometry, two or more kinds of amino acids can be seen. Figure 3E is a schematic diagram showing a mass spectrum of glycine included in the novel carbon-based material. Figure 3F is a schematic diagram of a mass spectrum of alanine included in the novel carbon-based material.

The present technical solution further includes applications of the novel carbon-based material. The above-mentioned novel carbon-based material is applied in a biological environment for inducing or regulating the functions of biosynthesis and metabolic pathways. After a trace of the novel carbon-based material is released into a growth environment of an organism, the organism will actively respond to the induction of the novel carbon-based material. Meanwhile, the material has a broad spectrum of response. Depending on the growth characteristics of different organisms, beneficial effects of response are different, such as accelerated growth, increased biomass, improved stress resistance, increased yield and improved quality.

In the present application, the biological environment at least comprises plants, microorganisms, and an ecological environment.

Plants that can respond actively include at least field crops such as rice, corn, wheat, and potatoes, and at least include cash crops such as tobacco, vegetables, flowers, and fruit trees.

The microorganisms include at least bio-bacterial fertilized strains and flora, and engineered strains and flora.

The ecological environment at least comprises an ecosystem composed of plants, soil, and microorganisms.

The novel carbon-based material may be applied directly to the soil, or the novel carbon-based material may be added to other fertilizers, and applied to the soil by means of flushing application, drip irrigation or sprinkling irrigation.

### Embodiment 5

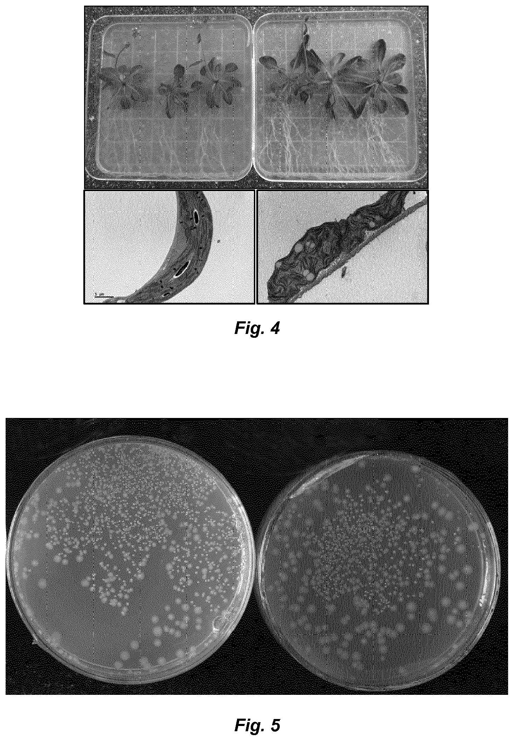

As shown in Figure 4, by taking Arabidopsis thaliana as an example, the left photograph shows Arabidopsis thaliana without the novel carbon-based material, and the right photograph shows Arabidopsis thaliana to which the novel carbon-based material is added. Other conditions are the same for the Arabidopsis thaliana in two photographs. After a period of culture, it can be seen clearly that the root of the Arabidopsis thaliana to which the novel carbon-based material is added increases much more than that of the Arabidopsis thaliana without the novel carbon-based material, and the Arabidopsis thaliana to which the novel carbon-based material has a faster growth rate, increased total amount of organisms and deepened leaf color.

Chloroplast cells are further observed with a transmission electron microscope (TEM). Grana lamellas of Chloroplast of the Arabidopsis thaliana to which the novel carbon-based material is added are increased in quantity, folded and curled, and starch granules and plastid globules are increased in quantity and size. This indicates that the Arabidopsis thaliana to which the novel carbon-based material is added makes a response. The biomass and growth rate are increased by means of increasing the photosynthetic efficiency of chloroplasts which is in correspondence with macroscopic leaf size and root development.

### Embodiment 6

As shown in Figure 5, by taking Escherichia coli as an example, a left culture dish and a right culture dish are the same in a culture solution and in a loading amount of bacteria solutions. The novel carbon-based material is added to the right culture dish. After a period of culture, upon observation, the growth rate of the Escherichia coli on the right side is accelerated, which is reflected by the fact that the bacterial colony amplification rate is significantly higher than that of a control example, and is manifested by the enlargement of bacterial plaque formed by single bacterial colony.

## Claims

1. A novel carbon-based material, which is prepared by taking a natural or simple inorganic matter capable of providing carbon, hydrogen, oxygen and nitrogen as a raw material, and by transforming the inorganic matter into an organic matter by low-voltage electrolysis, wherein
the organic matter at least comprises a carbon base, at least two kinds of amino acids or ammonium-based active ingredients, and an R group that maintains the novel carbon-based material in a relatively stable state.

2. The novel carbon-based material according to claim 1, wherein the molecular formula of the organic matter is C_{X}H_{y}O_{z}Nₖ, wherein x ranges from 2 to 1000, y ranges from 50 to 1200, z ranges from 30 to1000, and k is a natural number from 1 to 100; and
the organic matter, after being released into water, comprises the carbon base, an organic small molecule, and the R group that maintains the novel carbon-based material in a relatively stable state, wherein the organic small molecule includes at least two kinds of the amino acids or the ammonium-based active ingredients.

3. The novel carbon-based material according to claim 1, wherein the raw material is water, graphite and inorganic nitrogen source, or the raw material is water, methane and ammonia gas.

4. The novel carbon-based material according to claim 3, wherein the water is deionized water; the graphite is natural graphite or artificial graphite; the inorganic nitrogen source comprises nitrogen from one or a combination of two or more of ammonia gas, nitrogen gas, and ammonium nitrogen or nitrate nitrogen.

5. The novel carbon-based material according to claim 2, wherein the organic matter has a general formula of C-R-N or 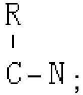 the carbon base takes carbon in a graphite structure as a skeleton; the R group or the ammonium nitrogen or imido nitrogen is present on the surface and/or the edge of a substrate of the skeleton;
the R group comprises a combined functional group consisting of one or more of a hydroxyl, a carboxyl, an ether bond, an epoxy group, a carbonyl, an aldehyde group, an ester group, and an alkyl; and
the N group, after being released into water, comprises one or a combination of two or more of an amino group, an ammonium group or an amine group.

6. The novel carbon-based material according to claim 5, wherein the R group is a hydrophilic functional group.

7. The novel carbon-based material according to claim 6, wherein after the R group is released, a free radical R group is present, the pH of free hydrogen is 2-6, and conductivity is more than 1500 us/cm.

8. The novel carbon-based material according to claim 2, wherein the organic small molecule is a combination of a carbon element and at least one element of hydrogen, oxygen or nitrogen.

9. The novel carbon-based material according to claim 1, wherein the amino acids at least include alanine or glycine.

10. The novel carbon-based material according to claim 1, wherein the novel carbon-based material comprises an aqueous agent or powder; the aqueous agent can be obtained directly from water-added powder.

11. Application of a novel carbon-based material, wherein the novel carbon-based material according to any of claims 1 to 10 is applied to a biological environment for inducing or regulating the functions of biosynthesis and metabolic pathways.

12. The application of the novel carbon-based material according to claim 11, wherein the biological environment at least comprises plants, microorganisms, and an ecological environment.

13. The application of the novel carbon-based material according to claim 12, wherein the microorganisms include at least bio-bacterial fertilized strains and flora, and engineered strains and flora.

14. The application of the novel carbon-based material according to claim 12, wherein the ecological environment at least comprises an ecosystem composed of plants, soil, and microorganisms.
